# EUROPEAN PATENT SPECIFICATION

(11) **EP 0 753 034 B1**
(45) Date of publication and mention of the grant of the patent: **11.11.1998**
(21) Application number: 95912366.2
(22) Date of filing: 24.03.1995
(51) Int. Cl.: C09K 7/06

(54) **DRILLING MUD**
BOHRSCHLAMM
BOUE DE FORAGE

(30) Priority: 26.03.1994 GB 9406057
(43) Date of publication of application: 15.01.1997
(73) Proprietor: HERIOT-WATT UNIVERSITY, Edinburgh EH14 4AS (GB)
(72) Inventor: WILKINSON, Alastair, Ord, Edinburgh EH12 8AQ (GB); GRIGSON, Stephen, John, Wentworth, Midlothian EH14 5JS (GB); TURNBULL, Robert, William, Dalgety Bay, Fife KY11 5YF (GB)
(74) Representative: Szczuka, Jan Tymoteusz
(86) International application number: GB9500680
(87) International publication number: WO9526386

(56) References cited:
- EP-A- 0 374 671
- EP-A- 0 374 672
- EP-A- 0 382 071
- EP-A- 0 386 636
- EP-A- 0 625 563
- US-A- 4 631 136

## Description

The present invention relates to drilling muds and more particularly drilling muds suitable for use in drilling for the exploitation of oil and/or natural gas in off-shore and other environmentally sensitive situations.

It has previously been proposed to use natural animal and vegetable oils in drilling fluids. Thus US-A-4,631,136 (Jones) discloses the use of natural plant or vegetable oils in a drilling fluid free of aromatics and petroleum based deriatives. Jones is particularly concerned with minimising the oils' tendency to oxidise in use or upon heating which leads to polymerisation, and discloses that the addition of antioxidants reduces or eliminates this problem. EP-A-0,382,071 discloses the use of methylesters of monocarboxylic acids in the oil phase of invert drilling muds with substantial quantities of lime without the mud undergoing unwanted premature thickening. Reference is also made in EP-A-0,382,071 to the possibility of including natural triglyceride ester oils in the oil phase and the use of the methylesters as highly effective diluents and stabilizers for such natural glycerol esters improving the rheological properties thereof.

As discussed in US-A-5,232,910 though such previous proposals suffered from substantial disadvantages including high viscosity and hydrolysis of the oil component by the alkaline components e.g. lime (Ca(OH)₂) used in drilling fluids in order to, inter alia, prevent corrosion. US-A-5,232,910 seeks to avoid these problems by avoiding the inclusion of the triglyceride esters which normally constitute such animal/vegetable oils, and using instead monofunctional alcohol esters generally obtained by chemical modifications of the oils comprising hydrolysis of the natural oils, separation of the acid components, and re-esterification thereof with suitable alcohols. This additional processing is however inconvenient and can result in additional expense.

It is an object of the present invention to avoid or minimize one or more of the above disadvantages.

It has now surprisingly been found that natural triglyceride ester oils with relatively high viscosity can be satisfactorily used in drilling fluids with minimal hydrolysis problems if substantially unrefined vegetable oils are avoided.

The present invention provides an invert emulsion drilling mud having a continuous oil phase free of mineral oil; a disperse aqueous phase; emulsifier means; and weighting agent means; and preferably fluid loss inhibition means, characterised in that: said oil phase consists essentially of a natural triglyceride ester oil which oil has a gum content of not more than 2% v/v, said emulsion has a pH value not higher than 12.5 and said emulsifier means is effective at pH values up to 12.5.

As discussed further hereinbelow, natural triglyceride ester oils contain considerable amounts of gums e.g. up to around 5% v/v or more and we have found that if the gum content of such oils is substantially reduced to 2% v/v or less, then the undesirable hydrolysis of the oils can be substantially reduced or avoided.

We have also found that hydrolysis of the vegetable oil leading to loss of performance can be substantially avoided or at least restricted to acceptable levels if the mud is made substantially lime-free and excessively alkaline or acid conditions are avoided. Drilling muds traditionally contain substantial amounts of lime and thus are more or less highly alkaline (pH greater than 13), in order to avoid corrosion. Surprisingly we have found, though, that corrosion is not, in practice, a significant problem with drilling muds which are entirely lime-free and even mildly acidic, though as further discussed hereinbelow, hydrolysis can be contained to acceptable levels even when up to around 0.14%, w/v of lime is present corresponding to pH valves of around 12.5 in the aqueous phase, provided more or less highly refined vegetable oil is used. When less refined grades of oil are used then a less-alkaline pH should be used.

In accordance with the present invention the oils used are substantially degummed to a gum content of not more than 2% v/v i.e. more than 50% v/v of the gum content has been removed. Preferably the oils are at least of super-degummed grade as used in chemical manufacturing. Advantageously the oils are of a substantially fully, refined grade which is more or less readily available e.g. so-called "edible-grade" oil, In general the greater the degree of refinement, the greater the reduction in susceptibility to hydrolysis that can be achieved. In practice we have found that crude unrefined vegetable oils can contain up to around 5% v/v or more of non-glyceride components or so-called gums which are multicomponent mixtures containing such things as phosphate esters, sterols, triterpene alcohols, fatty alcohols, waxes and minerals, which have the potential to act as surface-active agents and thereby influence the rapeseed oil hydrolysis process; itself an interfacial phenomenon. Thus in accordance with the present invention there is used vegetable oil containing not more that 2%, most preferably not more than 0.5%, advantageously not more than 0.25%, v/v of gums.

Suitable combinations of pH, lime content, and gum content in the vegetable oil (i.e. degree of refinement) can be readily determined by simple trial and error. In general there may be used a pH in the range from 4 to 12.5, preferably from 5 to 12, advantageously from 6 to 11.

Thus with a drilling mud of the present invention it is possible to provide environmentally acceptable drilling muds based on readily available natural triglyceride ester oils, which muds have operating characteristics and performance comparable to those of previously known drilling muds, and which are reasonably stable under normal operating conditions.

Particularly suitable natural triglyceride ester oils that may be mentioned include vegetable oils which are triglyceride esters of long-chain (12 to 24 carbon atoms), saturated or preferably unsaturated, carboxylic acids of the type commonly described as fatty acids, which are liquid at standard temperature and pressure. Particularly suitable vegetable oils include rapeseed, olive, sunflower, peanut, palm kernel, grape seed, safflower and corn oils.

In general the relative amounts of the principal components, that is the oil phase, water phase, weighting agent etc. are comparable to those in conventional drilling muds. Thus the oil phase will generally comprise from 20 to 99, e.g. 20 to 80, advantageously from 35 to 99, preferably from 50 to 99% v/v of the drilling mud and the dispersed water phase from 0 to 80%, preferably 0 to 50%, desirably from 0 to 20, most preferably from 0 to 10, e.g. 2 to 10, advantageously from 3 to 8% v/v. The weighting agent is generally used in an amount of from 0 to 40% v/v, depending upon the requirements of the drilling conditions encountered and the remaining components usually do not exceed 10, generally 3 to 5%, v/v of the drilling mud.

In order to bring the viscosity of the oil phase down to an operationally suitable level, generally not more than 30cSt, preferably not more than 15cSt, at 40°C, there is used a suitable viscosity reducing diluent. Desirably this has a relatively high flash point; preferably not less than 65°C, advantageously not less than 70°C, most preferably not less than 100°C, and a viscosity of not more than about 10cSt at 40°C. Suitable diluents include medium length hydrocarbon chain alcohols, and ethers and esters based on medium length hydrocarbon chain alcohols. As used herein the expression "medium length" hydrocarbon chain generally indicates C5 to C15. Preferably there are used diluents wherein the "alcoholic" hydrocarbon chain length is from C6 to C10, e.g. C8. Specific diluents of this type that may be mentioned include:
- Esters:: 2-ethylhexyl acetate, di-2-ethylhexyl adipate, or 2-ethylhexyl oleate;
- Ethers:: dipropylene glycol monomethyl ether, di-isodecyl ether or di-octylether; and
- Alcohols:: Octan-2-ol

We have also found that aliphatic hydrocarbons are particularly convenient for use in the drilling muds of the invention. Hydrocarbons which have suitably high flash points and low viscosity as indicated above include linear alpha-alkenes having a hydrocarbon chain length of from C_{**10**} to C_{**22**}, preferably from C_{**14**} to C_{**20**}. Although branched chain hydrocarbons are less preferred, they may be used provided they are substantially free of short chain (generally less than C_{**6**}) branches.

The diluent, and indeed the various other additives, should also, at least when in combination with the other components in the drilling mud, be non-toxic and environmentally acceptable. Non-toxicity and acceptability are conveniently evaluated by means of the so-called PARCOM Tests established by the Paris Commission which establish standards for low toxicity and low bioaccumulation, and low persistence i.e. biodegradation, as follows:
1. Toxicity is determined for three categories of marine organism:
   * primary producers (72 h test using the marine single-celled alga *Skeletonema costatum)*
   * herbivore (48 h test using the marine crustacean copepod *Acartia tonsa)*
   * sediment dweller (10 day test using the marine amphipod *Corophium volutator*)

   The first two tests estimate the hazard of the drilling mud in the water column, while the third, as the name suggests, estimates the hazard of the material in the sediment (which is the primary environmental fate compartment for discharged solid waste). Few current drilling muds exhibit significant water column toxicity, and consequently evaluation often rests on the results of sediment toxicity tests. The first two tests estimate short-term (acute) toxicity and require the drilling mud to be non-toxic at drilling mud concentrations up to 1000 mg/l of water.
   For products which are of acceptably low acute toxicity, there may nevetheless still be a residual concern about the potential of the base fluid for bioaccumulation and long-term toxic effects.
2. Bioaccumulation concerns are addressed by the estimation of the octanol-water partition coefficient, generally using the OECD 117 guideline for HPLC determination. In cases where it is believed that this measurement may overestimate bioaccumulation potential, a direct measurement of bioaccumulation may be carried out using the marine mussel *Mytilus edulis.*
3. Biodegradability and the potential persistence of drilling mud components (in particular, the base fluid in invert emulsion systems) are addressed by measurements of aerobic and anaerobic degradation. These tests are conducted in accordance with a number of OECD and ISO guidelines, and at present require a minimum of 60% degradation within the test period (28-56 days) in order to be considered 'readily' degradable.

Evidence cf ready aerobic degradability (i.e. amenability to oxidative metabolism) can be used in conjunction with the results of *Mytilus* bioaccumulation tests (in particular, the rate of base fluid depuration from tissue) to provide a good indication of the extent to which a base fluid is likely to be significantly accumulated through the food chain.

The amount of diluent used may be varied within relatively wide limits depending on inter alia the desired drilling mud viscosity and the viscosity of the individual natural oil(s) used therein. In general there may be used from 5 to 60%, preferably from 10 to 50%, advantageously from 25 to 40 e.g. about 25%, v/v of diluent in the oil phase.

In addition to the reduction of the high viscosity due to the vegetable oil component, we have also found that the diluent used can additionally lead to a significant reduction in hydrolysis of the triglyceride ester. This affords a useful degree of flexibility in relation to other parameters of the drilling muds of the invention, for example, to allow the inclusion of small lime concentrations up to say 0.14% w/v, and/or reduction of the degree of refinement of the vegetable oil e.g. allowing the use of vegetable oils containing up to 3% v/v of gums.

In general the various additives used should be compatible with and/or capable of functioning effectively under substantially non-alkaline conditions.

Various suitable substantially non-alkaline capable emulsifier means are known in the art including oleophilic fatty acid salts such as those based on amido amines of the general formula NZ₃ wherein Z represents RCONH(CH₂)₂ - where R is a long chain hydrocarbon, generally C8 to C24 and other amido amines of the general formula NHZX wherein Z has the same meaning as before and X is, for example, ethoxylate. Generally these are used with a suitable carrier or solvent such as a glycol ether. A typical commercially available product is Interdrill Emul HT (Trade Mark) from the Schlumberger Dowell Company of London, England. Other suitable emulsifiers that may be mentioned include alkylbenzene sulphonates and imidazolines.

Suitable weighting agents known in the art are heavy metal minerals such as those based on barium e.g. barite, or iron e.g. haematite. In general these are used in an amount sufficient to increase the specific gravity of the mud to from 1.0 to 2.5 g/cm³, and are generally used in an amount of from 5 to 30% v/v in the mud.

Various "activity" control means are known in the art for preventing loss of the aqueous phase into the rock strata through which drilling is taking place, and include alkali or alkaline earth metal salts such as CaCl₂, NaCl, and KCl.

Provided they are not otherwise specifically excluded from the drilling muds of the present invention, any other additive conventionally used in drilling muds may be included in the drilling muds of the present invention. Thus for example there may be used a viscosity control or thickening agent such as an organophilic clay e.g. an organically treated smectite clay such as that available under the Trade Name: "Interdrill Vistone" from Schlumberger Dowell of London, England, or finely divided bentonite. Also there may be used an oil wetting agent to improve the oil wettability of the inorganic weighting material and other solid material present in the drilling fluid. Suitable agents include one or more of an alkyl benzene sulphonate and a fatty imidazoline salt. A suitable commercially available product is Interdrill OW (Trade Name) available from Schlumberger Dowell Ltd. of London, England.

Further preferred features and advantages of the present invention will appear from the following examples given by way of illustration.

### Examples 1 to 3 - Preparation of Drilling Muds

Invert drilling muds were prepared using a natural (i.e. not chemically modified) triglyceride ester rapeseed oil which had the following composition: 61% mono-unsaturated (predominantly oleic); 31% polyunsaturated (predominantly linoleic) and 8% saturated fatty acids. The oil used had been partially refined and was of super-degummed grade with a gum content of approximately 2% v/v.

The oil was mixed with the emulsifier: Emul HT; the oil-wetting agent: Interdrill O/W; and the organophilic clay: Vistone. Calcium chloride was dissolved in water and the resulting brine added to the stirred oil mixture. The resulting emulsion was stirred for approximately five minutes before barite was added, and the complete mixture was then stirred for a further 30 minutes. The maximum temperature of the mixture was controlled by the use of a water bath and was limited to 60-70°.

Three different muds were prepared with different proportions of the above components as set forth in Table 1 hereinbelow.

**Table 1**

| **Component** | **Quantity (g/lab barrel= g/350ml)** | | |
|---|---|---|---|
| | **Formulation 1** | **Formulation 2** | **Formulation 3** |
| Rapeseed Oil | 250.0 | 187.0 | 167.2 |
| Oil-wetting Agent | 1.0 | 1.0 | 1.0 |
| Emulsifier | 3.0 | 3.0 | 3.0 |
| Organophilic Clay | 7.8 | 7.8 | 7.8 |
| Water | 25.7 | 25.7 | 26.3 |
| Calcium Chloride | 10.0 | 10.0 | 12.2 |
| Diluent | nil | 55.5 | 50.8 |
| Barite | 120.3 | 120.3 | 256.7 |
| Specific Gravity | 1.2 | 1.2 | 1.5 |

### Examples 4 to 6 - Performance of Drilling Muds

The peformance capabilities of the drilling muds of Examples 1 to 3 were assessed as follows: The prepared muds were hot rolled at 120°C for sixteen hours and characterised using the API (American Petroleum Institute) Recommended Practice for the evaluation of oil-based drilling muds: 13B-2. This relates to a practical situation in which drilling mud may remain in situ in a drill hole for up to 16 hours during a drill bit change.

Further samples of the formulations were subjected to a prolonged hot rolling period of seventy two hours and recharacterised to demonstrate the substantial stability and resistance to hydrolysis of the drilling muds of the invention. The results are summarised in Table 2 hereinbelow.

**Table 2**

| **Rheological Property** | **FORMULATION 1** | | | **FORMULATION 2** | | | **FORMULATION 3** | | |
|---|---|---|---|---|---|---|---|---|---|
| | Fresh | Hot Rolled 16 hours | Hot Rolled 72 hours | Fresh | Hot Rolled 16 hours | Hot Rolled 72 hours | Fresh | Hot Rolled 16 hours | Hot Rolled 72 hours |
| Apparent viscosity (cP) | 80 | 78.5 | 58.5 | 45 | 47.5 | 42 | 66.5 | 59 | 66 |
| Plastic Viscosity (cP) | 71 | 67 | 51 | 38 | 41 | 35 | 52 | 46 | 53 |
| Yield Points (lb/100ft²) | 18 | 23 | 15 | 14 | 13 | 14 | 29 | 26 | 26 |
| 10 sec gel | 10 | 10 | 6 | 7 | 8 | 6 | 13 | 14 | 12 |
| 10 mm gel | 12 | 11 | 7 | 9 | 9 | 7 | 15 | 16 | 14 |
| Electrical Stability (volts) | 1574 | 1610 | >2000 | 1964 | 1666 | >2000 | >2000 | >2000 | >2000 |

As may be seen from the above Table, the electrical stability remained well above 1000 volts throughout indicating good stability of the emulsion and resistance to de-emulsification of the oil-water emulsion. The gel strength (resistance to settling out of weighting agent and drill cuttings) was also substantially preserved even after the extended hot rolling test.

**Table 3**

| Diluent | * Concentration (lb/barrel = g/350ml) | Percentage Triglyceride Hydrolysis After Hot Rolling (120 °C, 72 Hours) |
|---|---|---|
| Diluent-free (Control) | 0 | 50.8% |
| Octan-2-ol | 57.1 | 40.0% |
| Dipropylene glycol Monomethyl ether | 66.2 | 42.6% |
| Di-iso-decyl ether | 57.8 | 50.9% |
| 2-Ethylhexyl acetate | 60.3 | 38.5% |
| Di-2-ethylhexyl Adipate | 64.7 | 40.8% |

| | | |
|---|---|---|
| * Equivalent to 25% v/v of rapeseed oil present in the drilling mud formulation. | | |

### Example 8 - Effect of Gum Content on Rapeseed Oil Hydrolysis

The effect of added gum on the hydrolysis of a drilling mud based on edible grade rapeseed oil (containing less than 0.2 % gum) with the composition shown in table 4 is shown in Table 5 from which it may be seen that hydrolysis increases dramatically with increasing gum content.

**TABLE 4**

| Component | Concentration (lb/barrel = g/350ml) |
|---|---|
| Edible Grade Rapeseed Oil | 187.0 |
| 2-Ethylhexyl Acetate | 55.5 |
| Emul HT | 3.0 |
| Vistone | 7.8 |
| Water | 25.7 |
| CaCl₂ | 12.2 |
| Barite | 120.3 |

**TABLE 5**

| Comparison of Effect of Different Gum Contents | |
|---|---|
| Gum Content (lb/barrel = g/350ml) | Percent Triglyceride Hydrolysis After Hot-Rolling (120 °C, 72 Hours) |
| 0 | 6.7% |
| 5 | 14.9% |
| 10 | 28.5% |

### Example 9 - Use of Hydrocarbon Diluent in Drilling Mud

The effect of using of different amounts of hydrocarbon diluent commercially available under the Trade Name Ultidrill on triglyceride hydrolysis of an edible grade rapseed oil based drilling mud, is shown in Tables 6 and 7. In the case of samples 2 and 3, an alternative organophilic clay Truvis (also available from Schlumberger-Dowell), which is effective at lower concentrations, was used in place of Vistone. A conventional fluid loss additive, Truflo MVO (available from Schlumberger-Dowell), was also included to inhibit loss of drilling fluid into the drilled formation.

**TABLE 6**

| Component | Quantity (lb/barrel = g/350ml) | | |
|---|---|---|---|
| | Sample 1 | Sample 2 | Sample 3 |
| Edible Rapeseed Oil | 187.1 | 132.5 | 130.2 |
| Ultidrill | 53.4 | 62.1 | 61.1 |
| Interdrill OW | 1.0 | 1.0 | 1.0 |
| Emul HT | 3.0 | 6.0 | 6.0 |
| Vistone | 7.0 | nil | nil |
| Truvis | nil | 2.0 | 4.0 |
| Truflo MVO | 2.0 | 3.0 | 3.0 |
| Water | 26.0 | 25.29 | 25.17 |
| CaCl₂ | 12.2 | 7.35 | 7.31 |
| Barite | 127.5 | 348.0 | 350.4 |

**Table 7**

| | | | | | | |
|---|---|---|---|---|---|---|
| | Sample 1 | | Sample 2 | | Sample 3 | |

| **Rheological Properties** | **BHR** | ***AHR** | **BHR** | ***AHR** | **BHR** | ***AHR** |
|---|---|---|---|---|---|---|
| Apparent Viscosity (cP) | 43.5 | 39.5 | 75 | 85 | 63 | 66 |
| Plastic Viscosity (cP) | 36 | 35 | 61 | 69 | 54 | 53 |
| Yield Point (lb/100 ft²) | 15 | 9 | 28 | 32 | 18 | 26 |
| Fann 6 rpm reading | 8 | 6 | 16 | 18 | 15 | 14 |
| 10 second gel | 9 | 5 | 16 | 16 | 15 | 12.5 |
| 10 minute gel | 12 | 6 | 20 | 18 | 20 | 15 |
| Electrical stability (volts) | 1453 | 1609 | >2000 | 1353 | >2000 | 1651 |
| Triglyceride Hydrolysis (%) | nil | 6.8 | nil | 10.4 | nil | 10.3 |

| | | | | | | |
|---|---|---|---|---|---|---|
| BHR - Before Hot-Rolling AHR - After Hot-Rolling * - Hot-rolling at 120 °C, 72 hrs. | | | | | | |

### Example 10 - Lime Tolerance of Substantially Degummed Rapeseed Oil Drilling Mud

The tolerance of edible grade Rapeseed Oil based Drilling mud with the composition shown in Table 8, to increasing amounts of added lime, is shown in Table 9 from which it can be seen that triglyceride hydrolysis is limited to acceptable levels at added lime levels of up to around 0.4 lb/barrel after hot-rolling for 72 hours at 120°C. A conventional fluid loss additive Truflo 100 (similar to Truflo MVO in Example 9) was also included in the drilling mud.

**Table 8**

| Component | Quantity (lb/barrel = g/350ml) |
|---|---|
| Edible Grade Rapeseed Oil | 130.3 |
| Ultidrill | 61.0 |
| Emul HT | 6.0 |
| Interdrill FL | 1.0 |
| Truflo 100 | 3.5 |
| Truvis | 4.0 |
| CaCl₂ | 7.31 |
| Water | 25.71 |
| Barite | 350.4 |

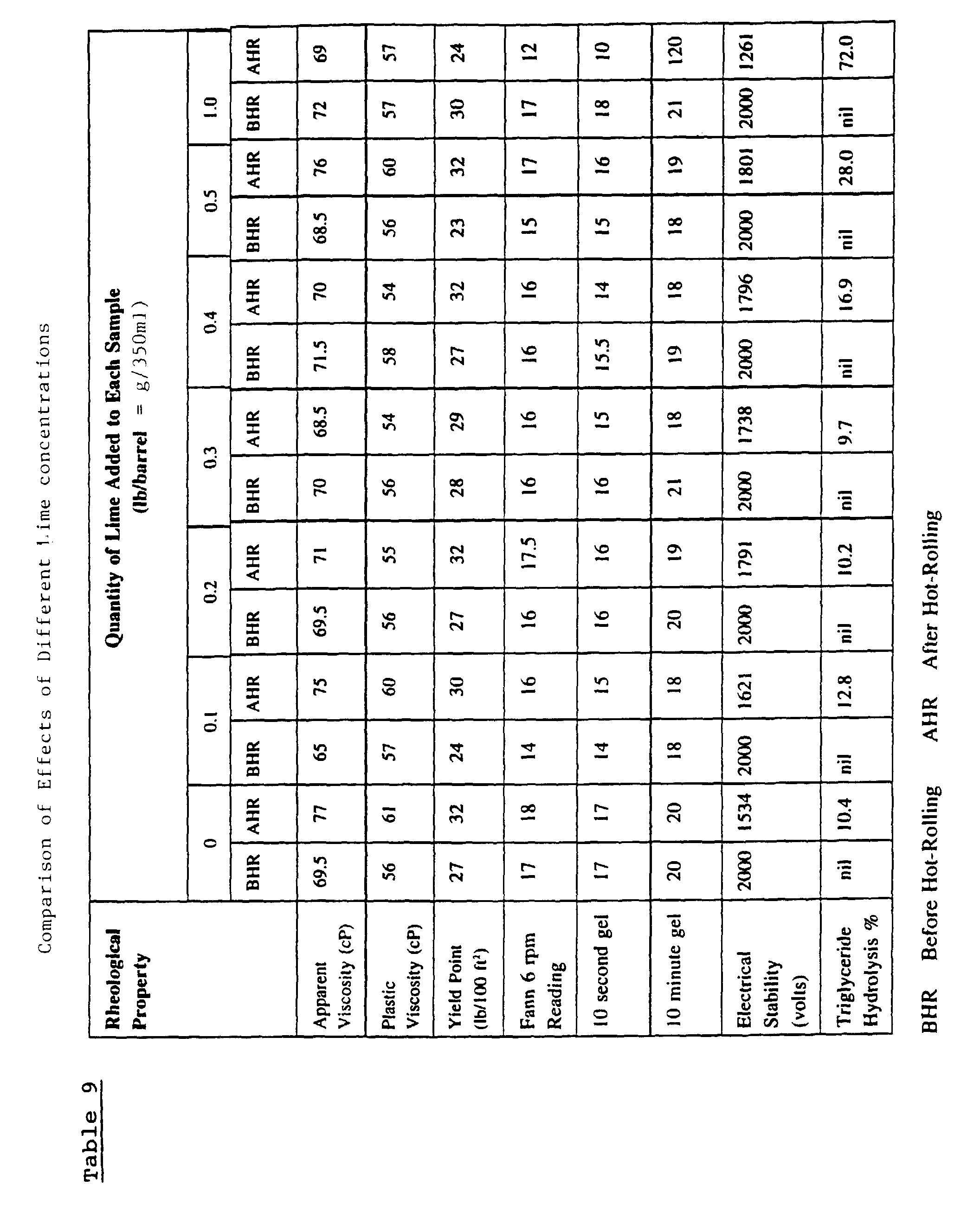

## Claims

1. An invert emulsion drilling mud having a continuous oil phase free of mineral oil; a disperse aqueous phase; emulsifier means; and weighting agent means; characterised in that: said oil phase consists essentially of a natural triglyceride ester oil which oil has a gum content of not more than 2% v/v, said emulsion has a pH value not higher than 12.5 and said emulsifier means is effective at pH values up to 12.5.

2. A mud according to claim 1 wherein said oil phase includes from 5 to 50% v/v of a non-toxic biodegradable oil viscosity reducing diluent having a flash point not lower than 65°C and a viscosity of not more than 10cSt at 40°C.

3. A mud according to claim 2 wherein said diluent is selected from aliphatic hydrocarbons, aliphatic hydrocarbon alcohols, and ethers and esters of aliphatic hydrocarbon alcohols.

4. A mud according to claim 3 wherein the diluent comprises a saturated or unsaturated hydrocarbon having a hydrocarbon chain length of from C₁₀ to C₂₂.

5. A mud according to any one of claims 2 to 4 which contains from 25% to 40% v/v of diluent in the oil phase.

6. A mud according to any one of claims 1 to 5 wherein said oil has a gum content of not more than 0.5% v/v.

7. A mud according to any one of claims 1 to 6 wherein said oil is of an edible-grade.

8. A mud according to any one of claims 1 to 7 which contains not more than 0.14% w/v of lime.

9. A mud according to any preceding claim which has a pH value in the range from 4 to 11.

10. A mud according to any one of claims 1 to 9 wherein is included a fluid-loss inhibition means.

## Patentansprüche

1. Bohrschlamm-Invertemulsion mit einer kontinuierlichen Ölphase die frei von Mineralölen ist; einer dispergierten wäßrigen Phase; einem Emulsionsmittel; und einem Füllstoffmittel; dadurch gekennzeichnet daß: die Ölphase im wesentlichen aus einem natürlichen Triglyceridesteröl besteht, wobei dieses Öl einen Gummigehalt von nicht mehr als 2% V/V aufweist, die Emulsion einen pH-Wert von nicht mehr als 12,5 besitzt und das Emulsionsmittel bei pH-Werten bis 12,5 wirksam ist.

2. Schlamm gemäß Anspruch 1, worin die Ölphase von 5 bis 50% V/V eines nicht toxischen, biologisch abbaubaren, die Viskosität des Öles herabsetzenden Verdünners enthält, welcher einen nicht unter 65°C liegenden Flammpunkt und eine nicht über 10 cSt bei 40°C liegende Viskosität aufweist.

3. Schlamm gemäß Anspruch 2, worin der Verdünner ausgewählt wird unter aliphatischen Kohlenwasserstoffen, aliphatischen Kohlenwasserstoffalkoholen sowie Ethern und Estern von aliphatischen Kohlenwasserstoffalkoholen.

4. Schlamm gemäß Anspruch 3, worin der Verdünner einen gesättigten oder einen ungesättigten Kohlenwasserstoff enthält, welcher eine Kohlenwasserstoffkettenlänge von zwischen C₁₀ und C₂₂ aufweist.

5. Schlamm gemäß irgendeinem der Ansprüche 2 bis 4, welcher zwischen 25% und 40% V/V an Verdünner in der Ölphase enthält.

6. Schlamm gemäß irgendeinem der Ansprüche 1 bis 5, worin das Öl einen Gummigehalt von nicht mehr als 0,5% V/V aufweist.

7. Schlamm gemäß irgendeinem der Ansprüche 1 bis 6, worin das Öl von einem "genießbaren Grad" ist.

8. Schlamm gemäß irgendeinem der Ansprüche 1 bis 7, welcher nicht mehr als 0,14% G/V Kalk enthält.

9. Schlamm gemäß irgendeinem der vorhergehenden Ansprüche, welcher einen pH-Wert in der Größenordnung von zwischen 4 und 11 aufweist.

10. Schlamm gemäß irgendeinem der Ansprüche 1 bis 9, worin ein den Flüssigkeitsverlust verhinderndes Mittel enthalten ist.

## Revendications

1. Boue de forage à émulsion inversée avec une phase huileuse continue dépourvue d'huile minérale; une phase aqueuse dispersée; un émulsifiant; ainsi qu'un agent de charge; caractérisée en ce que: ladite phase huileuse est composée essentiellement d'une huile estérifiée d'un triglycéride naturel, laquelle huile présente une teneur en gomme qui n'est pas supérieure à 2% en rapport v/v, ladite émulsion possède une valeur de pH qui n'est pas supérieure à 12,5 et ledit émulsifiant est efficace pour des valeurs de pH allant jusqu'à 12,5.

2. Boue selon la revendication 1, dans laquelle ladite phase huileuse comprend entre 5 et 50% v/v d'un diluant, qui est biodégradable, non toxique et réducteur de la viscosité de l'huile, et qui possède un point d'inflammation qui n'est pas inférieur à 65°C et une viscosité qui n'est pas supérieure à 10 cSt à 40°C.

3. Boue selon la revendication 2, dans laquelle ledit diluant est choisi parmi des hydrocarbures aliphatiques, des alcools d'hydrocarbures aliphatiques ainsi que des éthers et des esters d'alcools d'hydrocarbures aliphatiques.

4. Boue selon la revendication 3, dans laquelle le diluant comprend un hydrocarbure saturé ou insaturé qui possède une longueur de chaîne d'hydrocarbure comprise entre C₁₀ et C₂₂.

5. Boue selon l'une quelconque des revendications 2 à 4, qui contient entre 25% et 40% v/v de diluant dans la phase huileuse.

6. Boue selon l'une quelconque des revendications 1 à 5, dans laquelle ladite huile possède une teneur en gomme qui n'est pas supérieure à 0,5% v/v.

7. Boue selon l'une quelconque des revendications 1 à 6, dans laquelle ladite huile est de "qualité comestible".

8. Boue selon l'une quelconque des revendications 1 à 7, qui ne contient pas plus de 0,14% en rapport p/v de chaux.

9. Boue selon l'une quelconque des revendications précédentes, qui possède une valeur de pH comprise entre 4 et 11.

10. Boue selon l'une quelconque des revendications 1 à 9, dans laquelle un inhibiteur de perte de fluide est inclus.
